# EUROPÄISCHE PATENTSCHRIFT

(11) **EP 2 404 097 B1**
(45) Veröffentlichungstag und Bekanntmachung des Hinweises auf die Patenterteilung: **01.10.2014**
(21) Anmeldenummer: 10707214.2
(22) Anmeldetag: 26.02.2010
(51) Int. Cl.: F16L 41/14

(54) **ANSCHLUSSSYSTEM ZUM ANSCHLIESSEN EINES ROHRS AN EIN HAUPTROHR**
CONNECTING SYSTEM FOR CONNECTING A PIPE TO A MAIN PIPE
SYSTÈME DE RACCORD POUR LE RACCORD D'UN TUYAU À UN TUYAU PRINCIPAL

(30) Priorität: 05.03.2009 DE 102009011360
(43) Veröffentlichungstag der Anmeldung: 11.01.2012
(73) Patentinhaber: Rehau AG & Co, 95111 Rehau (DE)
(72) Erfinder: LEIHBECHER, Heiko, 90530 Wendelstein (DE); HENDEL, Roland, 91086 Aurachtal (DE); SIEBER, Jürgen, 91074 Herzogenaurach (DE)
(86) Internationale Anmeldenummer: PCT/EP2010/001190
(87) Internationale Veröffentlichungsnummer: WO 2010/099897

(56) Entgegenhaltungen:
- EP-B1- 0 975 914
- DE-A1- 2 550 202
- GB-A- 2 120 340

## Beschreibung

### Hintergrund der Erfindung

Die vorliegende Erfindung betrifft ein Anschlusssystem zum Anschließen eines Rohrs an ein Hauptrohr.

Bekannte Anschlusssysteme bzw. Anschlussstutzen zum Anschließen eines Rohrs an ein Hauptrohr sind infolge der bereitzustellenden Dichtheit der Verbindung zwischen Hauptrohr und Anschlussstutzen meist aufwendig gestaltet, so dass die Montage bekannter Anschlusssysteme an Hauptrohre meist recht aufwendig ist. Bekannte Anschlusssysteme umfassen eine Vielzahl von zu montierenden Bauteilen, die teilweise weit in das Hauptrohr hineinragen, wobei die Abdichtung vom Inneren des Rohrs bzw. in der Lochlaibung erfolgt, wie beispielsweise bei der aus der EP 0 975 914 B1 bekannten Vorrichtung zum dichtverschließenden Verbinden eines Kanalrohrs mit einem Hauptrohr. Die jeweils verwendete Dichtung ist nach dem Einbau nicht mehr sichtbar und kann beim Einbau wegklappen und dadurch beschädigt werden, wobei Form und Dicke der Dichtung eine nur sehr geringe Verformung des Hauptrohres erlaubt, einhergehend mit einer Neigung zur Undichtigkeit. Ferner ist infolge der aufwendigen Gestaltung bekannter Anschlusssysteme für die Montage oft ein nahezu vollständiges Freilegen des Hauptrohres erforderlich.

Aus der EP 0 975 914 B1 ist eine Vorrichtung zum dichtschließenden Verbinden eines Kanalrohres mit einem Anschlussrohr bekannt. Hierzu ist vorgesehen, ein Innenteil, das ein Gewinde aufweist, mit einem Einsatzstück, das ein Einschraubaussengewinde aufweist, zu verschrauben und dadurch festzulegen.

Auch aus der GB 2 120 340 A ist eine Vorrichtung bekannt, mit der ein Kanalrohr mit einem Anschlussrohr verbindbar ist. Dazu ist ein Innenteil mit einem Sattelstück über ein Einschraubeinsatzstück verbunden.

Aus der DE 25 50 202 A1 ist schließlich ein Rohrflansch zum Abzweigen von Rohrleitungen aus Öffnungen bekannt, der aus einem Einsatzring und einem Rohrstutzen sowie einem Anschlussrohrstück gebildet ist.

### Zugrundeliegende Aufgabe

Der vorliegenden Erfindung liegt daher die Aufgabe zugrunde, ein Anschlusssystem zum Anschließen eines Rohrs an ein Hauptrohr anzugeben, das im Vergleich zu bekannten Lösungen wesentlich einfacher an das jeweilige Hauptrohr anschließbar ist.

### Erfindungsgemäße Lösung

Diese Aufgabe wird erfindungsgemäß mit einem Anschlusssystem zum Anschließen eines Rohrs an ein Hauptrohr mit den Merkmalen des Anspruchs 1 gelöst.

Die Abdichtung erfolgt über ein Dichtelement, das im Verbindungs-Zustand mit einer an einer Außenfläche des Hauptrohres anliegenden Kontaktfläche die Abzweigöffnung umschließt, so dass eine Abdichtung über die Außenfläche erfolgt, was die Verbindung des Anschlusssystems mit dem Hauptrohr sehr erleichtert. So ist zur Herstellung der Verbindung des Anschlusssystems mit dem Hauptrohr das elastisch verformbare Innenrohr zunächst zusammenzudrücken und mit der abgeknickten Lasche voran durch eine Abzweigöffnung des Hauptrohrs in dieses teilweise einzuschieben.

Anschließend werden der Haltering und das Dichtelement auf das Innenrohr aufgeschoben und das Dichtelement wird mit der Außenfläche des Hauptrohres kontaktiert, wobei das Aufschieben des Halterings und des Dichtelements über den Endabschnitt des Innenrohrs erfolgt, der dem Endabschnitt, der die Lasche aufweist, gegenüberliegt. In vorteilhafter Weise kann dabei vorgesehen sein, dass das Dichtelement in den Haltering vor dem Aufschieben auf das Innenrohr bereits eingelegt ist.

Nach dem Aufschieben des Halterings und des Dichtrings erfolgt das Aufschrauben des Abzweigelements auf das Innenrohr, um den Haltering gegen das Dichtelement zu drücken bzw. um durch Zugkraft die äußere Anlagefläche der Lasche gegen die Hauptrohr-Innenfläche zu drücken, einhergehend mit der Schaffung einer stabilen Verbindung des Anschlusssystems mit dem Hauptrohr, die eine wirksame Abdichtung wenigstens des sich von dem Haltring bis zu dem Hauptrohr erstreckenden Bereichs des Anschlusssystems bereitstellt. Vor oder während des Aufschraubvorgangs wird die äußere Anlagefläche der Lasche wenigstens teilweise mit der Hauptrohr-Innenfläche kontaktiert, so dass durch Aufschrauben des Abzweigelements auf das Innenrohr der Haltering gegen das Dichtelement gedrückt werden kann. Die Anlagefläche der Lasche, wobei die Lasche von der zentralen Längsachse des Innenrohrs weggeknickt ist, dient hierbei als Gegenlager bzw. Widerlager. Vorzugsweise erfolgt hierbei die Kontaktierung der Anlagefläche der Lasche mit der Hauptrohr-Innenfläche erst nachdem das Innenrohr entspannt bzw. in den unverformten bzw. den nicht zusammengedrückten Zustand überführt worden ist.

Das Dichtelement ist vorzugsweise ein aus Polymermaterial dreidimensional gespritztes Dichtelement, wobei das Polymermaterial beispielsweise EPDM (Ethylen-Propylen-Dien-Kautschuk) oder NBR (Nitril-Butadien-Kautschuk) oder SBR (Styrol-Butadien-Kautschuk) sein kann. Zur Realisierung einer hinreichenden Dichtwirkung weist das Polymermaterial des Dichtelements eine Härte in Form einer Shore-A-Härte auf, die vornehmlich innerhalb eines Bereiches von 35 bis 55 Einheiten liegt. Insbesondere kann das Dichtelement aus einem weichelastischen Material gebildet sein. Das Innenrohr, der Haltering und das Abzweigelement bestehen vorzugsweise aus einem Polymermaterial, das insbesondere ein füllstofffreies Polypropylen sein kann, welches u. a. eine hohe Schlagfestigkeit aufweist.

Das Anschlusssystem ist im Unterschied zu bekannten Lösungen, die eine Abdichtung vom Inneren des Hauptrohrs verfolgen, auf einfache und praktische Weise mit dem Hauptrohr verbindbar. Nach Herstellung der Verbindung des Anschlusssystems mit dem Hauptrohr kann dann bequem die Verbindung des Rohrs mit dem Hauptrohr geschaffen werden durch Anschließen bzw. Verbinden des Abzweigelements an das Rohr bzw. mit dem Rohr. Das Dichtelement kann im Unterschied zu bekannten Lösungen nicht umklappen bzw. wegklappen und ist von außen immer sichtbar. Die Anzahl und die Größe der in das Hauptrohr hineinragenden Teile ist deutlich reduziert. Im Vergleich zu bekannten Lösungen sind deutlich höhere Toleranzen in der Größe der Abzweigöffnung ohne Einfluss auf die Dichtigkeit möglich.

Vorzugsweise weist das Innenrohr einen Innenrohr-Abschnitt auf, der an den Endabschnitt, der die abgeknickte Lasche aufweist, angrenzt und der einen Außendurchmesser aufweist, der innerhalb eines Bereichs liegt, der 90 bis 100 % des Durchmessers des anzuschließen-den Rohres umfasst. Aussendruchmesser, die innerhalb dieses Bereichs liegen, vermeiden in wirksamer Weise ein nachteiliges ungewolltes Einklemmen des Innenrohrs in der Abzweigöffnung.

Bei einer bevorzugten Ausführungsform ist die Lasche als umlaufender Bund ausgebildet, einhergehend mit der Möglichkeit, die Hauptrohr-Innenfläche entlang des gesamten Randes der Abzweigöffnung zu kontaktieren bzw. zu berühren.

Bei einer bevorzugten Ausführungsform ist das Abzweigelement über ein an einer Außenfläche des Innenrohrs ausgebildetes Gewinde auf das Innenrohr geschraubt. So kann auf praktische Weise eine feste bzw. sicherere Verbindung des Anschlusssystems mit dem Hauptrohr durch Aufschrauben des Abzweigelements auf das Innenrohr geschaffen werden.

Bei einer besonders bevorzugten Ausführungsform weist das Anschlusssystem wenigstens einen Dichtring auf, der im Verbindungs-Zustand zwischen dem Abzweigelement und dem Haltering angeordnet ist. Mit dem Dichtring, der vorzugsweise wenigstens teilweise aus Polymermaterial besteht und welcher insbesondere in Form eines O-Rings ausgebildet sein kann, ist eine wirksame Abdichtung des gesamten Anschlusssystems möglich, derart, dass mittels des Dichtrings ein Austritt von Fluid zwischen dem Abzweigelement und dem Haltering wirksam vermieden werden kann. Der Dichtring und ferner auch das Dichtelement können mit einem integrierten Gleitmittel versehen sein, um eine dauerhafte Gleitfähigkeit bereitzustellen.

Bei einer praktischen Ausführungsform ist das Dichtelement im Haltering geführt und drehfest / lagefest in Bezug auf das Innenrohr auf dieses aufschiebbar. So kann das Dichtelement auf praktische Weise in einer gewünschten vorgegebenen Position in Bezug auf das Innenrohr bzw. auch in Bezug auf das Hauptrohr mit der Außenfläche des Hauptrohres in Kontakt gebracht werden.

Bei einer besonders praktischen Ausführungsform ist das Dichtelement drehfest in Bezug auf den Haltering an diesem angebracht, wobei der Haltering vorzugsweise geführt und drehfest in Bezug auf das Innenrohr auf dieses aufschiebbar ist.

Mit dieser praktischen Ausführungsform ist insbesondere bei üblichen Hauptrohren mit runden bzw. kreisringförmigem Querschnitt eine bequeme Verbindung des Anschlusssystems mit dem Hauptrohr möglich, da durch die geführte und drehfeste Aufschiebbarkeit des Haltrings, das Dichtelement - welches wiederum drehfest in Bezug auf den Haltering an diesem angebracht ist - in eine vorgegebene Position in Bezug auf die Abzweig-Öffnung mit der Außenfläche in Kontakt gebracht werden kann.

Vorzugsweise weist der Haltering einen im Verbindungs-Zustand dem Hauptrohr zugewandten Endabschnitt auf, welcher der Kontur der Außenfläche in einer Umgebung, die an die Abzweigöffnung angrenzt, im Wesentlichen angepasst ist, um eine gleichmäßige Verpressung des Dichtelements durch Aufschrauben des Abzweigelements auf das Innenrohr zu erzielen. So kann selbst bei unebenen Außenflächen, wie sie oft bei üblichen Rohren mit kreisringförmigem Querschnitt vorliegen, eine dichte Verbindung bereitgestellt werden. Die vorgegebene Position in Bezug auf die Abzweigöffnung ist dann vorzugsweise diejenige Position, in welcher der Endabschnitt des Haltrings derart relativ zu der Abzweigöffnung angeordnet ist, dass er der Kontur der Außenfläche in Umgebung der Abzweigöffnung folgt. Insofern stellt die geführte und drehfeste Aufschiebbarkeit des Halterings sicher, dass dieser nicht in einer von dieser angepassten Position abweichenden Stellung relativ zur der Abzweigöffnung positioniert wird. Hierbei kann zusätzlich ein Haltewerkzeug vorteilhaft eingesetzt werden.

Bei einer bevorzugten Ausführungsform weist der Haltering wenigstens einen Anschlag zur Begrenzung des Aufschraubweges des Abzweigelements auf. So kann wirksam eine definierte bzw. vorgegebene Verpressung des Dichtelements erzielt werden. Insbesondere kann die Einstellung einer zu geringen oder zu hohen Verpressung des Dichtelements wirksam vermieden werden.

Bei einer weiteren bevorzugten Ausführungsform weist das Dichtelement wenigstens einen Bereich aus einem quellfähigen Material auf, der im Verbindungs-Zustand vorzugsweise einen Kontakt zu der Außenfläche des Hauptrohrs aufweist. Durch die Verwendung eines quellfähigen Materials, das insbesondere ein quellfähiges Elastomer bzw. ein thermoplastischer Elastomer-Verbund sein kann, kann trotz Beschädigungen an der Außenfläche, wie rissartigen Vertiefungen oder dergleichen (wie etwa Kratzer durch Bohrung oder ursprünglicher Rohrgrabenverfüllung), die Dichtigkeit hergestellt werden. Das quellfähige Material quillt bei Berührung mit Fluid auf, welches infolge der Beschädigungen nach außen tritt, wobei durch dieses Aufquellen die Dichtigkeit wieder hergestellt werden kann.

Bei einer praktischen Ausführungsform weist das Abzweigelement einen zusammenhängenden Innenvolumen-Bereich auf, der in Form einer Kugelgelenk-Aufnahme ausgebildet ist.

In der Kugelgelenk-Aufnahme kann ein korrespondierend zu der Kugelaufnahme ausgebildeter Endabschnitt des Rohrs, welches an das Hauptrohr anzuschließen ist, aufgenommen sein, einhergehend mit einer praktischen Neigungsmöglichkeit des anzuschließenden Rohrs relativ zu dem Anschlusssystem bzw. dem Hauptrohr und einer hinreichenden Dichtigkeit auch unter Scherlast.

Erfindungsgemäß weist das Anschlusssystem ein rohrförmiges Element mit einem aufgeweiteten Endabschnitt auf, wobei im Verbindungs-Zustand wenigstens der aufgeweitete Endabschnitt des rohrförmigen Elements in einem Innenvolumen-Bereich des Abzweigelements angeordnet ist und ein dem aufgeweiteten Endabschnitt gegenüberliegender Endabschnitt des rohrförmigen Elements in dem Endabschnitt des Innenrohrs aufgenommen ist, der der Lasche gegenüberliegt. Mit dem aufgeweiteten Endabschnitt des rohrförmigen Elements kann ein Gebiet des Innenvolumens des Abzweigelements wenigstens teilweise abgedeckt werden, welches sich vor dem Endabschnitt des Innenrohrs befindet, der der Lasche gegenüberliegt, mit dem Absicht eine Totwasser-Bildung bzw. Strömungsstagnation in diesem Gebiet zu vermeiden. Das rohrförmige Element ermöglicht somit insbesondere eine hydraulische Optimierung des Anschlusssystems.

Bei einer bevorzugten Ausführungsform ist an einer Außenwand des Halterings wenigstens eine Verstärkungsrippe ausgebildet, die sich vorzugsweise rechtwinkelig zu einer Längsachse oder einer Querachse des Halterings erstreckt. Vorzugsweise ist auch einer Außenwand des Abzweigelements wenigstens eine Verstärkungsrippe ausgebildet, die sich vorzugsweise rechtwinkelig zu einer Längsachse oder einer Querachse des Abzweigelements erstreckt. Die Verstärkungsrippen dienen zum einen der Aussteifung bzw. Verstärkung des Halterings bzw. des Abzweigelements. Ferner kann ein Werkzeug an der Verstärkungsrippe bzw. den Verstärkungsrippen des Halterings zur Anlage gebracht werden, um den Haltering drehfest zu halten während mit einem weiteren Werkzeug, das an der Verstärkungsrippe bzw. den Verstärkungsrippen des Abzweigelements zur Anlage gebracht wird, das Abzweigelement zur Herstellung des Verbindungs-Zustands auf das Innenrohr geschraubt wird.

Bei einer weiteren bevorzugten Ausführungsform weist wenigstens ein erster Abschnitt des Dichtelements, der im Verbindungs-Zustand einen größeren Abstand zu dem Abzweigelement aufweist als wenigstens ein zweiter Abschnitt des Dichtelements, im unverbundenen Zustand eine größere Querschnittsfläche auf als der zweite Abschnitt, wobei im unverbundenen Zustand, das Anschlusssystem von dem Hauptrohr getrennt ist.

Insbesondere bei üblichen Hauptrohren mit runden bzw. kreisringförmigem Querschnitt und einer Abzweigöffnung, die sich vorzugsweise rechtwinkelig zur zentralen Längsachse des Hauptrohrs erstreckt, weist das Dichtelement im Verbindungs-Zustand infolge der Geometrie der Außenfläche des Hauptrohrs in angrenzender Umgebung der Abzweigöffnung keinen gleichbleibenden Abstand zu dem Abzweigelement auf, wobei Abschnitte mit größerem Abstand zu dem Abzweigelement infolge einer kleineren Presskraftkomponente bzw. Druckkraftkomponente rechtwinkelig zur Außenfläche über den Haltering nicht so fest an die Außenfläche gedrückt werden können wie Abschnitte mit kleinerem Abstand zu dem Abzweigelement. So ist insbesondere im sogenannten Kämpferbereich der Abzweigöffnung, wo das Dichtelement den größten Abstand zu dem Abzeigelement aufweist, die resultierende Presskraftkomponente gegenüber dem sogenannten Scheitelbereich der Abzweigöffnung wesentlich verringert, wo das Dichtelement den kleinsten bzw. geringsten Abstand zu dem Abzweigelement aufweist. Erfindungsgemäß kann daher vorgesehen sein, dass der erste Abschnitt im unverbundenen Zustand eine größere Querschnittsfläche aufweist als der zweite Abschnitt, um einen Ausgleich der Dichtwirkung infolge verkleinerter Presskraftkomponenten bzw. Druckkraftkomponenten herbeizuführen. Alternativ kann der erste Abschnitt allgemein derart ausgebildet sein, das er gegenüber dem zweiten Abschnitt eine erhöhte Dichtwirkung aufweist, um den Ausgleich herbeizuführen. So ist es insbesondere möglich, dass der erste Abschnitt des Dichtelementes, welches vorzugsweise aus einem Polymermaterial besteht, eine kleinere bzw. geringere Härte - z.B. in Form einer Shore-A-Härte oder einer Shore-B-Härte - aufweist als der zweite Abschnitt.

### Kurzbeschreibung der Zeichnungen

Nachfolgend werden Ausführungsbeispiele der Erfindung anhand der beigefügten Zeichnungen näher. Es zeigt:
- Fig. 1: eine Schnittdarstellung eines Ausführungsbeispiels des erfindungsgemäßen Anschlusssystems,
- Fig. 2: eine Seitenansicht des Innenrohrs des in Fig. 1 dargestellten Ausführungsbeispiels,
- Fig. 3: eine Draufsicht des Innenrohrs des in Fig. 1 dargestellten Ausführungsbeispiels,
- Fig. 4, 5: Detaildarstellungen der Schnitte A-A und E-E aus Fig. 2 und Fig. 3,
- Fig. 6: eine Draufsicht des Halterings des in Fig. 1 dargestellten Ausführungsbeispiels,
- Fig. 7: eine seitliche Schnittansicht des Halterings des in Fig. 1 dargestellten Ausführungsbeispiels,
- Fig. 8: eine vergrößerte Detaildarstellung des in Fig. 7 dargestellten Details C
- Fig. 9: eine Draufsicht des Dichtelements des in Fig. 1 dargestellten Ausführungsbeispiels,
- Fig. 10: eine geschnittene dreidimensionale Darstellung des Dichtelements des in Fig. 1 dargestellten Ausführungsbeispiels,
- Fig. 11: eine Darstellung des Schnitts B-B aus Fig. 9,
- Fig. 12: eine teilweise geschnittene dreidimensionale Darstellung des rohrförmigen Elements des in Fig. 1 dargestellten Ausführungsbeispiels zusammen mit einer vergrößerten Detaildarstellung,
- Fig. 13: eine dreidimensionale Darstellung des in Fig. 1 dargestellten Ausführungsbeispiels verbunden mit einem Hauptrohr, wobei das Anschlusssystem geschnitten dargestellt ist, mit einer Schnittebene rechtwinkelig zur Längsachse des Hauptrohrs, und wobei ein mit dem Hauptrohr unverbundener Abschnitt des Abzweigelements nicht dargestellt ist,
- Fig. 14, 15: die Darstellung aus Fig. 13 aus unterschiedlichen Blickrichtungen und vergrößert dargestellt,
- Fig. 16: eine dreidimensionale Darstellung des in Fig. 1 dargestellten Ausführungsbeispiels verbunden mit einem Hauptrohr, wobei das Anschlusssystem geschnitten dargestellt ist, mit einer Schnittebene parallel zur Längsachse des Hauptrohrs,
- Fig. 17: eine Darstellung, die das Anschlusssystem der Fig. 16 vergrößert darstellt, und
- Fig. 18: eine Schnittdarstellung eines weiteren Ausführungsbeispiels des erfindungsgemäßen Anschlusssystems.

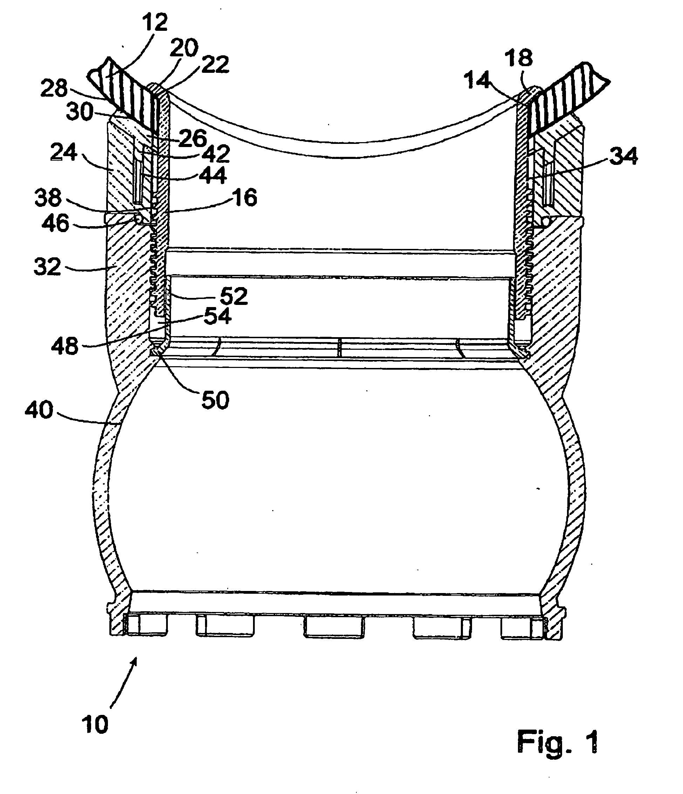

Das in Fig. 1 geschnitten dargestellte Anschlusssystem 10 ist im Verbindungs-Zustand dargestellt, also in dem Zustand, in dem das Anschlusssystem 10 mit einem Hauptrohr 12 (nur teilweise dargestellt), das eine Abzweigöffnung 14 aufweist, verbunden ist. Das Anschlusssystem 10 weist ein elastisch verformbares Innenrohr 16 auf, wobei das Innenrohr 16 einen Endabschnitt mit einer abgeknickten Lasche in Form eines umlaufenden Bundes 18 aufweist, wobei das Innenrohr 16 zuvor durch Zusammendrücken mit dem Bund 18 voran durch die Abzweigöffnung 14 des Hauptrohrs 12 in dieses teilweise eingeschoben worden ist. Eine äußere Anlagefläche 20 des Bunds 18 kontaktiert eine Hauptrohr-Innenfläche 22, die an die Abzweigöffnung 14 angrenzt und diese umgibt.

Das Anschlusssystem 10 weist ferner einen Haltering 24 und ein Dichtelement 26 auf, wobei der Haltering 24 und das Dichtelement 26 auf das Innenrohr 16 aufgeschoben sind, und wobei das Dichtelement 26 mit einer an einer Außenfläche 28 des Hauptrohres 12 anliegenden Kontaktfläche 30 die Abzweigöffnung 14 umschließt.

Ein Abzweigelement 32 des Anschlusssystems 10, das für eine Verbindung mit dem jeweils anzuschließen Rohr vorgesehen ist (nicht dargestellt), ist über ein an einer Außenfläche 34 des Innenrohrs 16 ausgebildetes Gewinde 38 auf das Innenrohr 16 geschraubt und drückt dabei den Haltering 24 gegen das Dichtelement 26, wobei die Anlagefläche 20 des Bunds 18 als Gegenlager bzw. Widerlager dient und gegen die Hauptrohr-Innenfläche 22 gedrückt ist. Das Abzweigelement 32 weist einen zusammenhängenden Innenvolumen-Bereich auf, der in Form einer Kugelgelenk-Aufnahme 40 ausgebildet ist. Das Dichtelement 26 ist drehfest in Bezug auf den Haltring 24 an diesem angebracht und weist hierfür mehrere voneinander beabstandete Anformungen 42 auf, die in Aufnahmen bzw. Vertiefungen 44 des Halterings 24 aufgenommen sind, wobei die Aufnahmen bzw. Vertiefungen 44 vorzugsweise korrespondierend zu den Anformungen 42 ausgebildet sind.

Ein Dichtring 46 des Anschlusssystems 10 ist zwischen dem Abzweigelement 32 und dem Haltering 24 angeordnet. Mit dem Dichtring 46 ist in Verbindung mit dem Dichtelement 26 eine wirksame Abdichtung des gesamten Anschlusssystems 10 möglich, derart, dass mittels des Dichtrings 46 ein Austritt von Fluid zwischen dem Abzweigelement 32 und dem Haltering 24 wirksam vermieden werden kann.

Ein rohrförmiges Element 48 des Anschlusssystems 10 dient der hydraulischen Optimierung. Es weist einen aufgeweiteten Endabschnitt 50 auf, der in einem InnenvolumenBereich des Abzweigelements 32 angeordnet ist. Ein dem aufgeweiteten Endabschnitt 50 gegenüberliegender Endabschnitt 52 des rohrförmigen Elements 48 ist in dem Endabschnitt des Innenrohrs 16 aufgenommen, der dem Bund 18 gegenüberliegt. Der aufgeweitete Endabschnitt 50 deckt ein sich vor diesem Endabschnitt des Innenrohrs 16 befindendes Gebiet 54 des Abzweigelement-Innenvolumens ab, um eine Totwasser-Bildung bzw. Strömungsstagnation in diesem Gebiet 54 zu vermeiden.

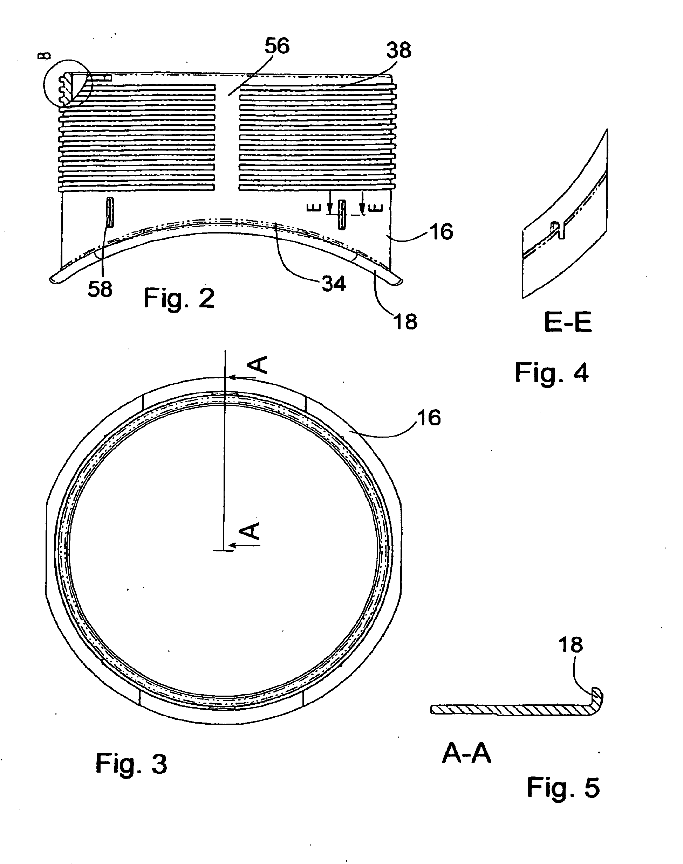

Die Fig. 2 zeigt eine Seitenansicht des Innenrohrs 16. Das an der Außenfläche 34 des Innenrohrs 16 ausgebildete Gewinde 38 ist von zwei gegenüberliegenden Nuten 56 unterbrochen, die dafür vorgesehen sind, den Haltering 24 über in diese Nuten 56 einschiebbare Nasen bzw. Vorsprünge(hier nicht dargestellt), welche an dem Haltering 24 ausgebildet sind, drehfest auf das Innenrohr 16 aufzuschieben. An der Außenfläche 34 des Innenrohrs 16 ausgebildete Vorsprünge bzw. Nasen 58 dienen als Montagehilfe nach dem teilweisen Einschieben des Innenrohrs 16 mit dem Bund 18 voran, derart, dass das Innenrohr 16 mittels der Vorsprünge bzw. Nasen 58 klemmend in der Abzweigöffnung 14 gehalten werden kann.

Fig. 4 zeigt eine vergrößerte Darstellung eines Schnitts durch einen an der Außenfläche 34 des Innenrohrs 16 ausgebildeten Vorsprung 58 bzw. Nase 58. Die Innenfläche des Innenrohrs 16 kann eine Innensignierung, beispielsweise in Form einer Seriennummer oder dergleichen, aufweisen, welche in praktischer Weise vom Hauptrohr 12 aus lesbar ist. Dies ist insbesondere bei der Befahrung mit Kanalinspektionssystemen von Vorteil.

Die Fig. 5 zeigt eine Schnittdarstellung entlang der Schnittlinie A-A der in Fig. 3 dargestellten Draufsicht des Innenrohrs 16 zur Verdeutlichung der Geometrie des umlaufenden Bundes 18.

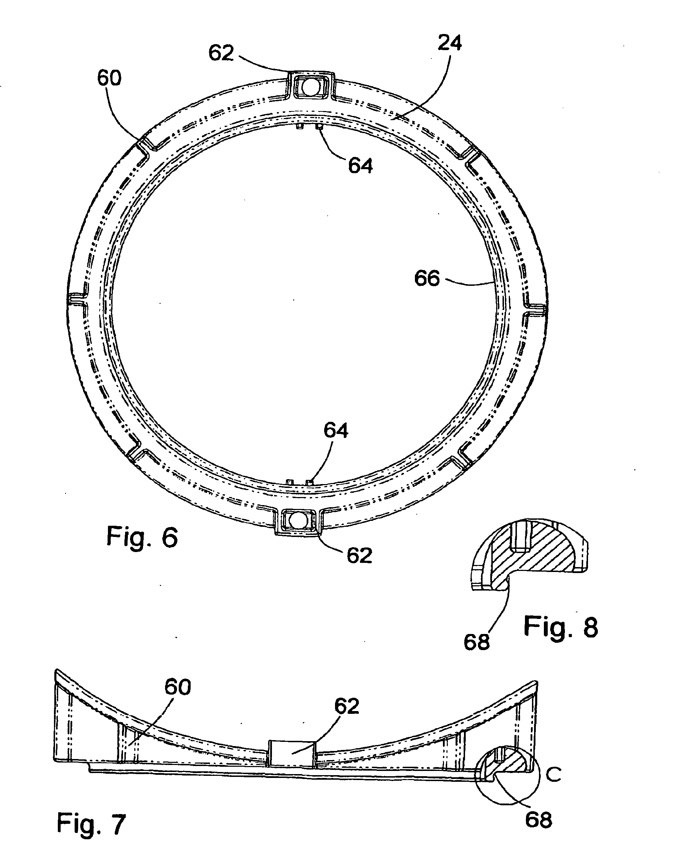

Die Fig. 6 zeigt eine Draufsicht des Halterings 24 und die Fig. 7 zeigt eine Seitenansicht des Halterings 24. An der Außenwand des Halterings 24 sind eine Mehrzahl von Verstärkungsrippen 60 ausgebildet. Ferner weist der Haltering 24 zwei Anschläge 62 zur Begrenzung des Aufschraubweges des Abzweigelements 32 auf, und zwar zur Erzielung einer definierten bzw. vorgegebenen Verpressung des Dichtelements 26. Vier vorstehende Elemente 64, die an der Innenfläche 66 des Halterings 24 ausgebildet sind, sind dafür vorgesehen, in die zwei gegenüberliegenden Nuten 56 des Innenrohrs (vgl. Fig. 2 und 3) eingeschoben zu werden, um den Haltring 24 drehfest auf das Innenrohr 16 aufschieben zu können. Das in Fig. 8 vergrößerte Detail C der Fig. 7 zeigt einen an dem Haltering 24 ausgebildeten Hinterschnitt 68 zur Aufnahme des Dichtrings 46 (vgl. Fig. 1).

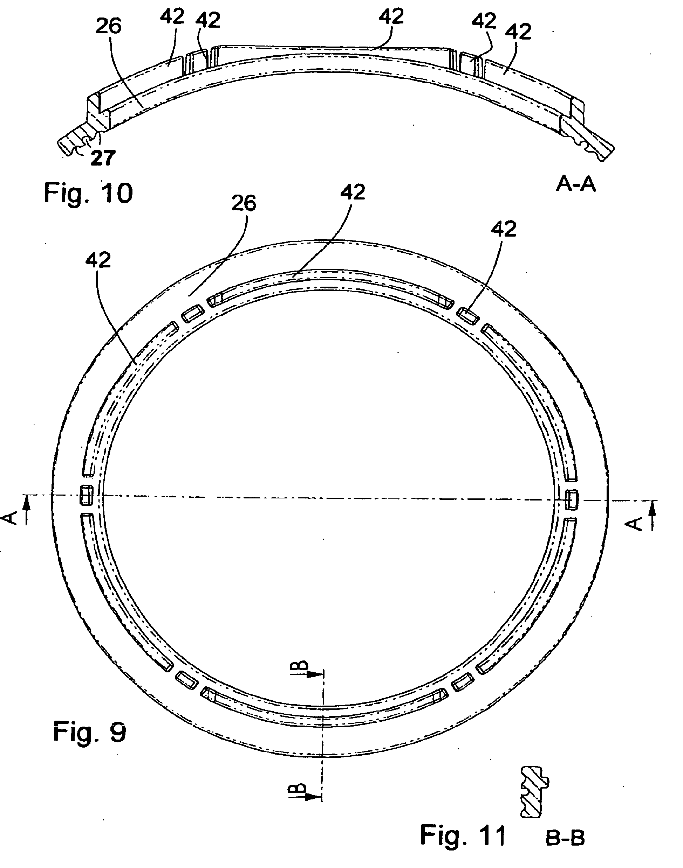

Die Fig. 9 zeigt eine Draufsicht des Dichtelements 26 und die Fig. 10 zeigt eine teilweise geschnittene dreidimensionale Darstellung des Dichtelements 26. Hier deutlich erkennbar sind die voneinander beabstandeten Anformungen 42 (vgl. auch Fig. 1) des Dichtelements 26, die dafür vorgesehen sind, in den Aufnahmen bzw. Vertiefungen 44 des Halterings 24 aufgenommen zu werden (vgl. auch Fig. 1), um das Dichtelement 26 drehfest / lagefest in Bezug auf den Haltring 24 an diesem anzubringen. Das Dichtelement 26 weist an einer Seite, die zum Anlegen an die Außenfläche 28 des Hauptrohrs 12 vorgesehen ist, drei konzentrische Ringnuten 27 auf (vgl. auch Fig. 11). Erfindungsgemäß kann diese Seite jedoch auch nur eine oder eine beliebige andere Anzahl von konzentrischen Ringnuten 27 aufweisen. Diese Ringnuten 27 bilden zusammen eine Mehrlippendichtung, welche bei Verpressung bzw. Pressung des Dichtelements 26 im Verbindungs-Zustand eine wirksame Abdichtung infolge einer Verformung der Ringnuten 27 bereitstellen.

Das Dichtelement 26 ist im Unterschied zu bekannten Lösungen eingerichtet Verformungen des Hauptrohrs 12 zu tolerieren, die bis zu 6 % betragen, und zwar ohne dabei eine wesentliche Einschränkung der Dichtwirkung zu erleiden. Auch eine schlechte Oberflächenqualität (beispielsweise in Form von Kratzern hervorgerufen durch Bohrung oder ursprüngliche Rohrgrabenfüllung) kann bis zu einem gewissen Grad ohne wesentlichen Einfluss auf die Dichtwirkung vom dem Dichtelement 26 toleriert werden.

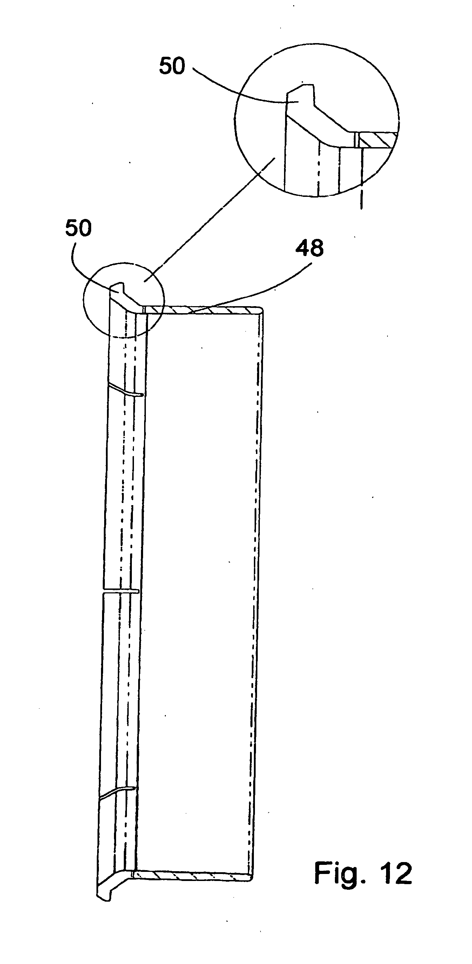

Die Fig. 12 zeigt eine teilweise geschnittene dreidimensionale Darstellung des rohrförmigen Elements 48 (vgl. auch Fig. 1), zusammen mit einer vergrößerten Detaildarstellung, welche die Geometrie des aufgeweiteten Endabschnitts 50 verdeutlicht.

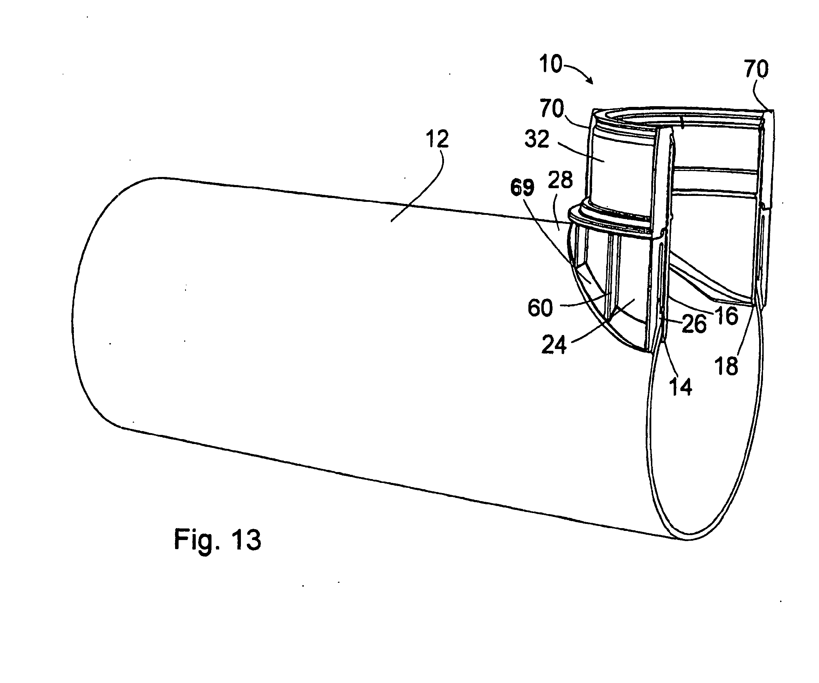

Die Fig. 13 zeigt eine dreidimensionale Darstellung des Anschlusssystems 10 verbunden mit einem Hauptrohr 12. Das Anschlusssystem 10 ist geschnitten dargestellt ist, mit einer Schnittebene rechtwinkelig zur Längsachse des Hauptrohrs 12, wobei ein mit dem Hauptrohr 12 unverbundener Endabschnitt des Abzweigelements 32 hier nicht dargestellt ist. Aus dieser Darstellung wird deutlich, dass der Haltering 24 einen im Verbindungs-Zustand dem Hauptrohr 12 zugewandten Endabschnitt 69 aufweist, welcher der Kontur der Außenfläche 28 in einer Umgebung, die an die Abzweigöffnung 14 angrenzt, im Wesentlichen angepasst ist, um eine gleichmäßige Verpressung des Dichtelements 26 durch Aufschrauben des Abzweigelements 32 auf das Innenrohr 16 zu erzielen, wobei die geführte und drehfeste Aufschiebbarkeit des Halterings 24 sicherstellt, dass der Haltering 24 nicht in einer Position bzw. Dreh-Position relativ zu der Abzweigöffnung 14 angeordnet wird, in welcher der Endabschnitt 69 des Halterings 24 der Kontur der Außenfläche 28 in Umgebung der Abzweigöffnung 14 nicht mehr oder im Wesentlichen nicht mehr folgt.

Klar erkennbar sind auch die an der Außenwand des Halterings 24 ausgebildeten Verstärkungsrippen 60, die neben der Aussteifung bzw. Verstärkung auch für die Anlage eines Werkzeugs zum drehfesten Halten des Halterings 24 während des Aufschrauben des Abzweigelements 32 auf das Innenrohr 16 vorgesehen sind. An der Außenwand des Abzweigelements 32 ausgebildete Verstärkungsrippen 70 sind, neben der Aussteifung bzw. Verstärkung, für die Anlage an ein weiteres Werkzeug vorgesehen mit dem das Abzweigelement 32 zur Herstellung des Verbindungs-Zustands auf das Innenrohr 16 geschraubt wird.

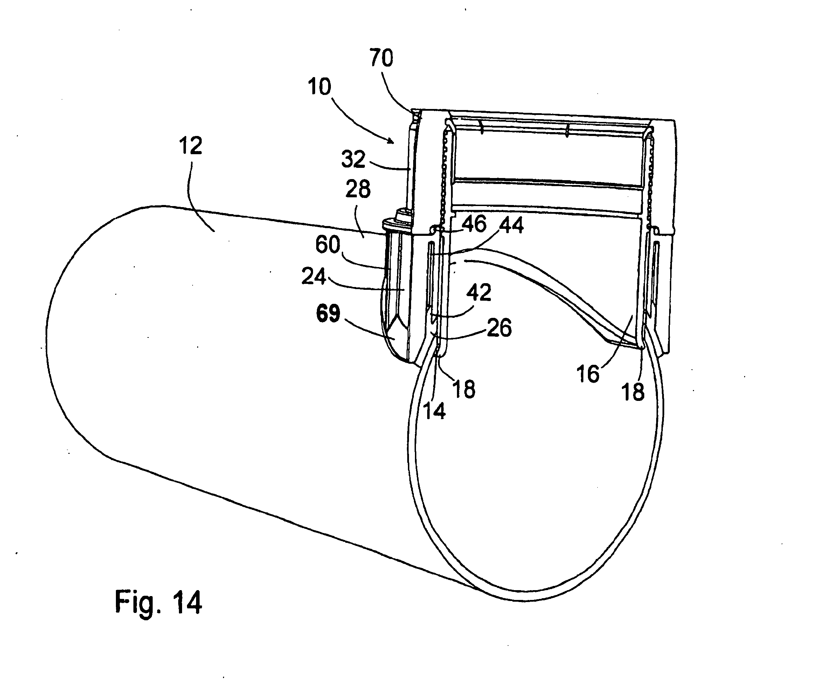

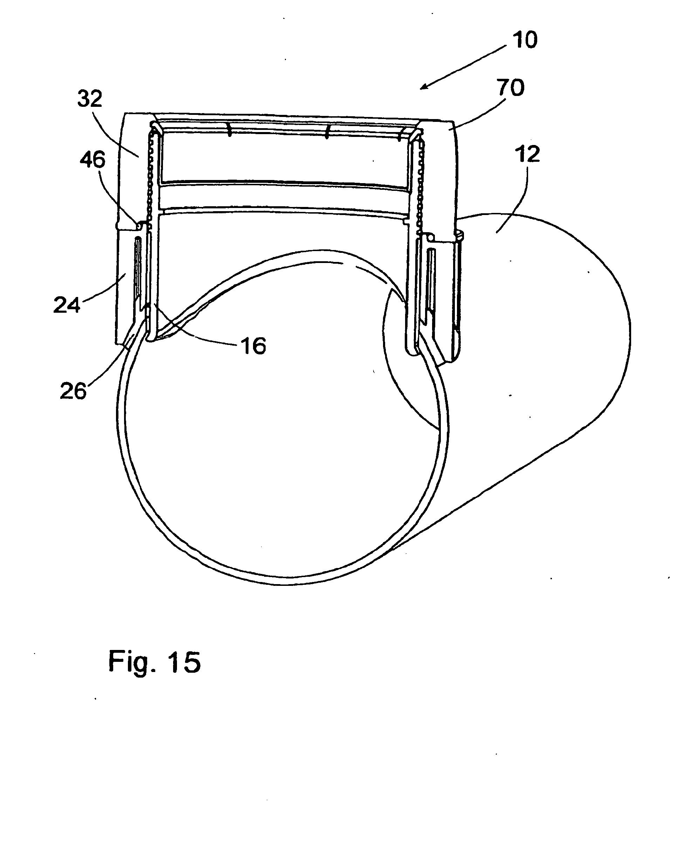

Die Fig. 14 und 15 zeigen das in Fig. 13 dargestellte Anschlusssystem 10 samt Hauptrohr 12 aus unterschiedlichen Blickrichtungen und in vergrößerter Form.

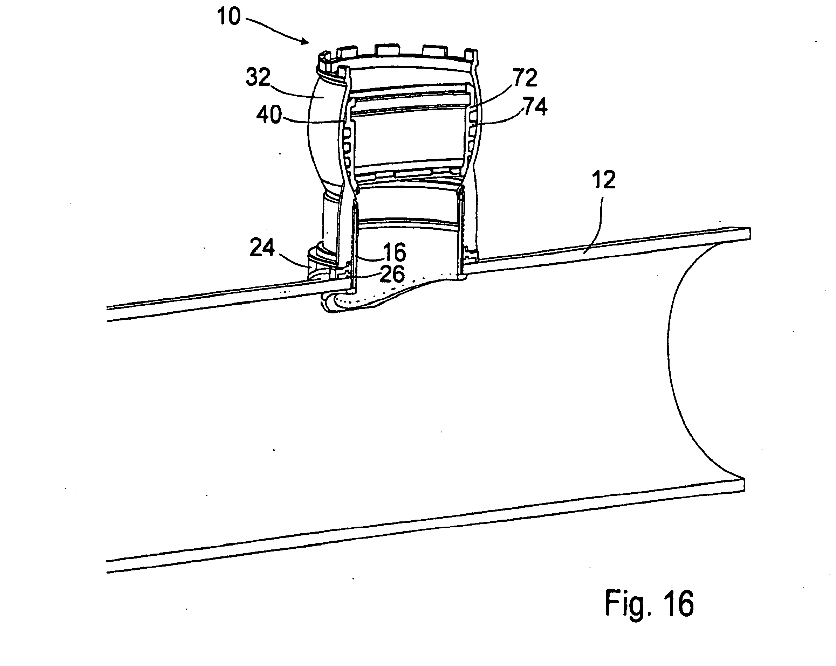

Die Fig. 16 zeigt eine dreidimensionale Darstellung des Anschlusssystems 10 verbunden mit einem Hauptrohr 12, wobei das Anschlusssystem 10 geschnitten dargestellt ist, mit einer Schnittebene parallel zur Längsachse des Hauptrohrs 12. Im Unterschied zu den Darstellungen der Fig. 13 bis 15 ist hier das Anschlusssystem vollständig dargestellt. Ferner ist in dem zusammenhängenden Innenvolumen-Bereich des Abzweigelements 32, der in Form einer Kugelgelenk-Aufnahme 40 ausgebildet ist, ein Verbindungsstück 72 für ein Rohr aufgenommen, das über das Anschlusssystem 10 an das Hauptrohr 12 anzuschließen ist. Das Verbindungsstück 72 weist ringförmige Rippen 74 mit unterschiedlichen Aussendruchmessern auf, die an die Geometrie der Kugelgelenk-Aufnahme 40 angepasst sind, so dass das Verbindungsstück 72 auf praktische Weise in verschiedene Neigungspositionen relativ zu dem Anschlusssystem 10 bzw. dem Hauptrohr 12 gebracht werden kann.

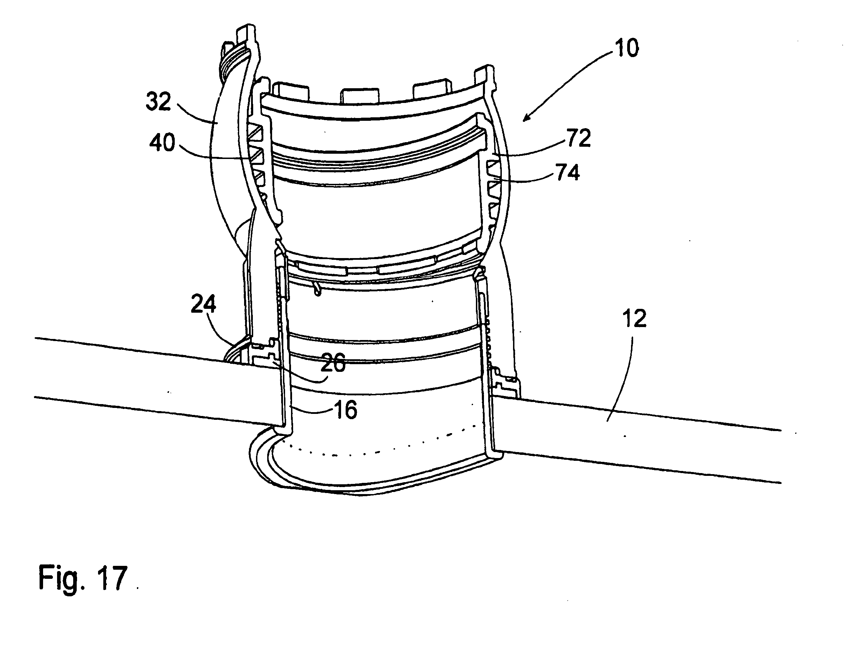

Die Fig. 17 zeigt das in Fig. 16 dargestellte Anschlusssystem 10 in vergrößerter Form.

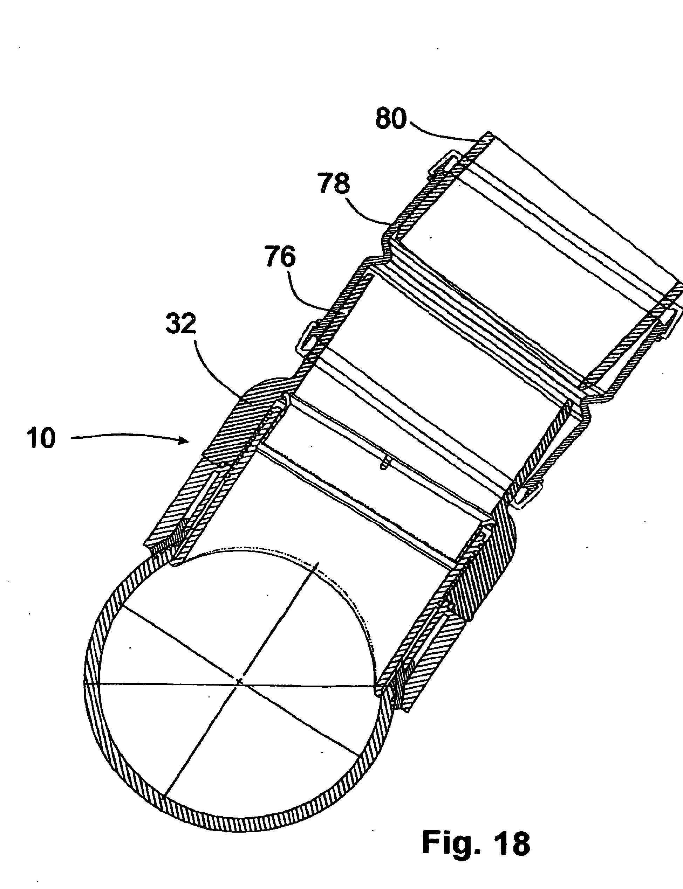

Die Fig. 18 zeigt eine Schnittdarstellung eines weiteren Ausführungsbeispiels des erfindungsgemäßen Anschlusssystems 10, bei dem das Abzweigelement 32 keinen zusammenhängenden Innenvolumen-Bereich, der in Form einer Kugelgelenk-Aufnahme ausgebildet ist, aufweist. Hier weist das Abzweigelement 32 einen Endabschnitt 76 in Form eines Rohrstücks mit gleichbleibender kreisringförmiger Querschnittsfläche auf, welcher zur Verbindung mit dem jeweiligen Rohr 80 - beispielsweise wie hier dargestellt - mit einer den Endabschnitt 76 umgebenden Doppelsteckmuffe 78 versehen werden kann, welche auch einen Endabschnitt des Rohrs 80 umgibt.

### Bezugszeichenliste

- 10: Anschlusssystem
- 12: Hauptrohr
- 14: Abzweigöffnung
- 16: Innenrohr
- 18: Bund
- 20: Anlagefläche Bund
- 22: Hauptrohr-Innenfläche
- 24: Haltering
- 26: Dichtelement
- 27: Ringnut
- 28: Außenfläche Hauptrohr
- 30: Kontaktfläche
- 32: Abzweigelements
- 34: Außenfläche Innenrohr
- 38: Gewinde Innenrohr
- 40: Kugelgelenk-Aufnahme
- 42: Anformung Dichtelement
- 44: Vertiefung Haltering
- 46: Dichtring
- 48: rohrförmiges Element
- 50: aufgeweiteter Endabschnitt
- 52: Endabschnitt rohrförmiges Element
- 54: Gebiet
- 56: Nut Innenrohr
- 58: Nase Innenrohr
- 60: Verstärkungsrippe
- 62: Anschlag
- 64: Vorstehendes Element
- 66: Innenfläche Haltering
- 68: Hinterschnitt
- 69: Endabschnitt Haltering
- 70: Verstärkungsrippe
- 72: Verbindungsstück
- 74: ringförmige Rippe
- 76: Endabschnitt
- 78: Doppelsteckmuffe
- 80: Rohr

## Patentansprüche

1. Anschlusssystem (10) zum Anschließen eines Rohrs an ein Hauptrohr (12), wobei das Anschlusssystem (10) zu diesem Zweck mit dem Hauptrohr (12) verbindbar ist, mit
- einem elastisch verformbaren Innenrohr (16), wobei das Innenrohr (16) einen Endabschnitt mit wenigstens einer abgeknickten Lasche (18) aufweist und durch Zusammendrücken mit der Lasche (18) voran durch eine Abzweigöffnung (14) des Hauptrohrs (12) in dieses teilweise einschiebbar ist, und wobei eine äußere Anlagefläche (20) der Lasche in einem Verbindungs-Zustand, in dem das Anschlusssystem (10) mit dem Hauptrohr (12) verbunden ist, wenigstens teilweise eine Hauptrohr-Innenfläche (22), die an die Abzweigöffnung (14) angrenzt und diese umgibt, kontaktiert,
- einem Haltering (24) und einem Dichtelement (26), wobei der Haltering (24) und das Dichtelement (26) im Verbindungs-Zustand auf das Innenrohr (16) aufgeschoben sind, und wobei das Dichtelement (26) im Verbindungs-Zustand mit einer an einer Außenfläche (28) des Hauptrohres (12) anliegenden Kontaktfläche (30) die Abzweigöffnung (14) umschließt,
- einem Abzweigelement (32), das für eine Verbindung mit dem Rohr vorgesehen ist, wobei das Abzweigelement (32) im Verbindungs-Zustand auf das Innenrohr (16) geschraubt ist und dabei den Haltering (24) gegen das Dichtelement (26) drückt,
**dadurch gekennzeichnet,**
**dass** das Anschlusssystem (10) ein rohrförmiges Element (48) mit einem aufgeweiteten Endabschnitt (50) aufweist, wobei im Verbindungs-Zustand wenigstens der aufgeweitete Endabschnitt (50) des rohrförmigen Elements (48) in einem Innenvolumen-Bereich des Abzweigelements (32) angeordnet ist und ein dem aufgeweiteten Endabschnitt (50) gegenüberliegender Endabschnitt (52) des rohrförmigen Elements (48) in dem Endabschnitt des Innenrohrs (16) aufgenommen ist, der der Lasche (18) gegenüberliegt.

2. Anschlusssystem (10) nach Anspruch 1, **dadurch gekennzeichnet, dass** die Lasche (18) als umlaufender Bund (18) ausgebildet ist.

3. Anschlusssystem (10) nach Anspruch 1 oder 2, **dadurch gekennzeichnet, dass** das Abzweigelement (32) über ein an einer Außenfläche (34) des Innenrohrs (16) ausgebildetes Gewinde (38) auf das Innenrohr (16) geschraubt ist.

4. Anschlusssystem (10) nach einem der vorangehenden Ansprüche, **dadurch gekennzeichnet, dass** das Anschlusssystem (10) wenigstens einen Dichtring (46) aufweist, der im Verbindungs-Zustand zwischen dem Abzweigelement (32) und dem Haltering (24) angeordnet ist.

5. Anschlusssystem (10) einem der vorangehenden Ansprüche, **dadurch gekennzeichnet, dass** das Dichtelement (26) geführt und drehfest in Bezug auf das Innenrohr (16) auf dieses aufschiebbar ist.

6. Anschlusssystem (10) nach einem der vorangehenden Ansprüche, **dadurch gekennzeichnet, dass** das Dichtelement (26) drehfest und lagefest in Bezug auf den Haltering (24) an diesem angebracht ist.

7. Anschlusssystem (10) nach einem der vorangehenden Ansprüche, **dadurch gekennzeichnet, dass** der Haltering (24) geführt und drehfest in Bezug auf das Innenrohr (16) auf dieses aufschiebbar ist.

8. Anschlusssystem (10) nach einem der vorangehenden Ansprüche, **dadurch gekennzeichnet, dass** der Haltering (24) wenigstens einen Anschlag (62) zur Begrenzung des Aufschraubweges des Abzweigelements (32) aufweist.

9. Anschlusssystem (10) nach einem der vorangehenden Ansprüche, **dadurch gekennzeichnet, dass** das Dichtelement (26) wenigstens einen Bereich aus einem quellfähigen Material aufweist, der im Verbindungs-Zustand vorzugsweise einen Kontakt zu der Außenfläche (28) des Hauptrohrs (12) aufweist.

10. Anschlusssystem (10) nach einem der vorangehenden Ansprüche, **dadurch gekennzeichnet, dass** das Abzweigelement (32) einen zusammenhängenden Innenvolumen-Bereich aufweist, der in Form einer Kugelgelenk-Aufnahme (40) oder einer Doppelsteckmuffe (78) ausgebildet ist.

11. Anschlusssystem (10) nach einem der vorangehenden Ansprüche, **dadurch gekennzeichnet, dass** an einer Außenwand des Halterings (24) wenigstens eine Verstärkungsrippe (60) ausgebildet ist, die sich vorzugsweise rechtwinkelig zu einer Längsachse oder einer Querachse des Halterings (24) erstreckt.

12. Anschlusssystem (10) nach einem der vorangehenden Ansprüche, **dadurch gekennzeichnet, dass** an einer Außenwand des Abzweigelements (32) wenigstens eine Verstärkungsrippe (70) ausgebildet ist, die sich vorzugsweise rechtwinkelig zu einer Längsachse oder einer Querachse des Abzweigelements (32) erstreckt.

13. Anschlusssystem (10) nach einem der vorangehenden Ansprüche, **dadurch gekennzeichnet, dass** wenigstens ein erster Abschnitt des Dichtelements (26), der im Verbindungs-Zustand einen größeren Abstand zu dem Abzweigelement (32) aufweist als wenigstens ein zweiter Abschnitt des Dichtelements (26), im unverbundenen Zustand eine größere Querschnittsfläche aufweist als der zweite Abschnitt, wobei im unverbundenen Zustand, das Anschlusssystem (10) von dem Hauptrohr (12) getrennt ist.

## Claims

1. Connection system (10) for the connection of a pipe to a main pipe (12), wherein the connection system (10) can be connected to the main pipe (12) for this purpose, having
- an elastically deformable inner pipe (16), wherein the inner pipe (16) has an end portion with at least one angled lug (18) and can be compressed in order to be pushed, with the lug (18) in front, part of the way into the main pipe (12), through a branching opening (14) of the latter, and wherein an outer abutment surface (20) of the lug, in a connected state, in which the connection system (10) has been connected to the main pipe (12), is in contact, at least in part, with a main-pipe inner surface (22), which is adjacent to the branching opening (14) and surrounds the latter,
- a retaining ring (24) and a sealing element (26), wherein the retaining ring (24) and the sealing element (26), in the connected state, have been pushed onto the inner pipe (16), and wherein the sealing element (26), in the connected state, encloses the branching opening (14) by way of a contact surface (30), which butts against an outer surface (28) of the main pipe (12),
- a branching element (32), which is provided for connection to the pipe, wherein the branching element (32), in the connected state, has been screwed onto the inner pipe (16) and, in the process, pushes the retaining ring (24) against the sealing element (26),
**characterized**
**in that** the connection system (10) has a tubular element (48) with a widened end portion (50), wherein, in the connected state, at least the widened end portion (50) of the tubular element (48) is arranged in an inner-volume region of the branching element (32) and an end portion (52) of the tubular element (48), said end portion being located opposite the widened end portion (50), is accommodated in that end portion of the inner pipe (16) which is located opposite the lug (18).

2. Connection system (10) according to Claim 1, **characterized in that** the lug (18) is designed in the form of an encircling collar (18).

3. Connection system (10) according to Claim 1 or 2, **characterized in that** the branching element (32) is screwed onto the inner pipe (16) via a thread (38) formed on an outer surface (34) of the inner pipe (16).

4. Connection system (10) according to one of the preceding claims, **characterized in that** the connection system (10) has at least one sealing ring (46), which, in the connected state, is arranged between the branching element (32) and the retaining ring (24).

5. Connection system (10) according to one of the preceding claims, **characterized in that** the sealing element (26) can be pushed onto the inner pipe (16) in a guided and rotationally fixed manner in relation to the latter.

6. Connection system (10) according to one of the preceding claims, **characterized in that** the sealing element (26) is fitted on the retaining ring (24) in a rotationally fixed and positionally fixed manner in relation to the latter.

7. Connection system (10) according to one of the preceding claims, **characterized in that** the retaining ring (24) can be pushed onto the inner pipe (16) in a guided and rotationally fixed manner in relation to the latter.

8. Connection system (10) according to one of the preceding claims, **characterized in that** the retaining ring (24) has at least one stop (62) for limiting the screwing-on distance of the branching element (32).

9. Connection system (10) according to one of the preceding claims, **characterized in that** the sealing element (26) has at least one region which is made of a swellable material and, in the connected state, is preferably in contact with the outer surface (28) of the main pipe (12).

10. Connection system (10) according to one of the preceding claims, **characterized in that** the branching element (32) has an interconnected inner-volume region which is designed in the form of a ball-joint mount (40) or of a double socket (78).

11. Connection system (10) according to one of the preceding claims, **characterized by** the formation, on an outer wall of the retaining ring (24), of at least one reinforcing rib (60), which extends preferably at right angles to a longitudinal axis or a transverse axis of the retaining ring (24).

12. Connection system (10) according to one of the preceding claims, **characterized by** the formation, on an outer wall of the branching element (32), of at least one reinforcing rib (70), which extends preferably at right angles to a longitudinal axis or a transverse axis of the branching element (32).

13. Connection system (10) according to one of the preceding claims, **characterized in that** at least one first portion of the sealing element (26), which in the connected state is spaced apart from the branching element (32) by a greater distance than at least one second portion of the sealing element (26), has a greater cross-sectional surface area, in the unconnected state, than the second portion, wherein, in the unconnected state, the connection system (10) is separated from the main pipe (12).

## Revendications

1. Système de raccord (10) pour raccorder un tuyau à un tuyau principal (12), le système de raccord (10) pouvant à cet effet être relié au tuyau principal (12), comprenant
- un tuyau intérieur (16) élastiquement déformable, le tuyau intérieur (16) comprenant une portion d'extrémité pourvue d'au moins une bride courbée (18) et pouvant être inséré par compression partiellement dans le tuyau principal à travers une ouverture de branchement (14) du tuyau principal (12), avec la bride (18) en avant, et une surface d'appui extérieure (20) de la bride, dans un état de liaison dans lequel le système de raccord (10) est relié au tuyau principal (12), venant en contact au moins partiellement avec une surface intérieure de tuyau principal (22) qui est adjacente à l'ouverture de branchement (14) et entoure celle-ci,
- une bague de retenue (24) et un élément d'étanchéité (26), la bague de retenue (24) et l'élément d'étanchéité (26) étant, dans l'état de liaison, enfilés sur le tuyau intérieur (16), et l'élément d'étanchéité (26), dans l'état de liaison, entourant l'ouverture de branchement (14) par une surface de contact (30) s'appliquant contre une surface extérieure (28) du tuyau principal (12),
- un élément de branchement (32) qui est prévu pour une liaison au tuyau, l'élément de branchement (32) étant, dans l'état de liaison, vissé sur le tuyau intérieur (16) et pressant en l'occurrence la bague de retenue (24) contre l'élément d'étanchéité (26),
**caractérisé en ce que**
le système de raccord (10) comprend un élément tubulaire (48) pourvu d'une portion d'extrémité élargie (50) et, dans l'état de liaison, au moins la portion d'extrémité élargie (50) de l'élément tubulaire (48) étant disposée dans une région de volume intérieur de l'élément de branchement (32) et une portion d'extrémité (52), opposée à la portion d'extrémité élargie (50), de l'élément tubulaire (48) étant reçue dans la portion d'extrémité du tuyau intérieur (16) qui est opposée à la bride (18).

2. Système de raccord (10) selon la revendication 1, **caractérisé en ce que** la bride (18) est réalisée sous forme de collerette périphérique (18).

3. Système de raccord (10) selon la revendication 1 ou 2, **caractérisé en ce que** l'élément de branchement (32) est vissé sur le tuyau intérieur (16) par le biais d'un filetage (38) réalisé sur une surface extérieure (34) du tuyau intérieur (16).

4. Système de raccord (10) selon l'une quelconque des revendications précédentes, **caractérisé en ce que** le système de raccord (10) comprend au moins une bague d'étanchéité (46), laquelle est, dans l'état de liaison, disposée entre l'élément de branchement (32) et la bague de retenue (24).

5. Système de raccord (10) selon l'une quelconque des revendications précédentes, **caractérisé en ce que** l'élément d'étanchéité (26) peut être enfilé sur le tuyau intérieur (16) de manière guidée et de manière solidaire en rotation par rapport à celui-ci.

6. Système de raccord (10) selon l'une quelconque des revendications précédentes, **caractérisé en ce que** l'élément d'étanchéité (26) est monté sur la bague de retenue (24) de manière solidaire en rotation et en position fixe par rapport à celle-ci.

7. Système de raccord (10) selon l'une quelconque des revendications précédentes, **caractérisé en ce que** la bague de retenue (24) peut être enfilée sur le tuyau intérieur (16) de manière guidée et de manière solidaire en rotation par rapport à celui-ci.

8. Système de raccord (10) selon l'une quelconque des revendications précédentes, **caractérisé en ce que** la bague de retenue (24) comprend au moins une butée (62) pour limiter la distance de vissage de l'élément de branchement (32).

9. Système de raccord (10) selon l'une quelconque des revendications précédentes, **caractérisé en ce que** l'élément d'étanchéité (26) comprend au moins une région constituée d'un matériau pouvant gonfler, laquelle région présente, dans l'état de liaison, de préférence un contact avec la surface extérieure (28) du tuyau principal (12).

10. Système de raccord (10) selon l'une quelconque des revendications précédentes, **caractérisé en ce que** l'élément de branchement (32) comprend une région de volume intérieur d'un seul tenant, laquelle est réalisée sous la forme d'un logement d'articulation à rotule (40) ou d'un double manchon emboîtable (78).

11. Système de raccord (10) selon l'une quelconque des revendications précédentes, **caractérisé en ce qu'**au moins une nervure de renforcement (60) est réalisée sur une paroi extérieure de la bague de retenue (24), laquelle nervure de renforcement s'étend de préférence perpendiculairement à un axe longitudinal ou à un axe transversal de la bague de retenue (24).

12. Système de raccord (10) selon l'une quelconque des revendications précédentes, **caractérisé en ce qu'**au moins une nervure de renforcement (70) est réalisée sur une paroi extérieure de l'élément de branchement (32), laquelle nervure de renforcement s'étend de préférence perpendiculairement à un axe longitudinal ou à un axe transversal de l'élément de branchement (32).

13. Système de raccord (10) selon l'une quelconque des revendications précédentes, **caractérisé en ce qu'**au moins une première portion de l'élément d'étanchéité (26), laquelle présente, dans l'état de liaison, une plus grande distance à l'élément de branchement (32) qu'au moins une deuxième portion de l'élément d'étanchéité (26), présente une plus grande surface en section transversale, à l'état non relié, que la deuxième portion, le système de raccord (10) étant séparé du tuyau principal (12) dans l'état non relié.
